# FASCICULE DE BREVET EUROPEEN

(11) **EP 0 674 667 B1**
(45) Date de publication et mention de la délivrance du brevet: **17.03.1999**
(21) Numéro de dépôt: 94902820.3
(22) Date de dépôt: 15.12.1993
(51) Int. Cl.: C08F 20/36, C08G 18/72, C07D 251/34, C07C 275/62

(54) **MONOMERE PRESENTANT AU MOINS UNE FONCTION ISOCYANATE ET UNE INSATURATION, SON PROCEDE DE SYNTHESE ET (CO)POLYMERES EN DECOULANT**
MINDESTENS EINE ISOCYANAT-GRUPPE UND EINE UNGESÄTTIGKEIT AUFWEISENDES MONOMER, VERFAHREN ZU DESSEN HERSTELLUNG, SOWIE DARAUS HERGESTELLTE (CO)POLYMERE
MONOMER PRESENTING AT LEAST ONE ISOCYANATE FUNCTION AND AN INSATURATION, SYNTHESIS PROCESS AND (CO)POLYMERS DERIVED THEREFROM

(30) Priorité: 15.12.1992 FR 9215117
(43) Date de publication de la demande: 04.10.1995
(73) Titulaire: RHODIA CHIMIE, 92408 Courbevoie Cédex (FR)
(72) Inventeur: DESBOIS, Michel, F-69140 Rilleux-la-Pape (FR); REEB, Roland, F-77410 Gressy-en-France (FR); RICHARD, Jo[l, F-60500 Chantilly (FR); TRUCHET, Françoise, F-69007 Lyon (FR)
(74) Mandataire: Ricalens, François
(86) Numéro de dépôt international: FR9301254
(87) Numéro de publication internationale: WO9413712

(56) Documents cités:
- EP-A- 0 126 359
- DE-A- 3 501 493
- GB-A- 1 487 766
- US-A- 4 816 597

## Description

La présente invention a pour objet un monomère présentant au moins une fonction isocyanate et une insaturation, un procédé de synthèse et les (co)polymères qui en sont issus. Elle concerne plus particulièrement des compositions utiles pour les revêtements.

Dans l'activité des peintures et des vernis, on utilise largement les diisocyanates notamment alcoylène diisocyanates (Tolonate) et leurs dérivés de type biuret ou leurs trimères.

Toutefois, deux problèmes restent à ce jour non résolus, à savoir :
- l'utilisation de solvant organique, dont la présence est réputée toxique et néfaste pour l'environnement ;
- la nécessité de mettre sur le marché des produits non volatils qui a conduit à alourdir les molécules et ce en oligomérisant les diisocyanates; cette solution n'est pas satisfaisante car elle utilise une fonction élaborée, donc chère, pour résoudre le problème.

C'est pourquoi un des buts de la présente invention est de fournir un procédé qui permette l'obtention d'un (co)polymère ou plutôt d'un pré(co)polymère qui, mis en dispersion dans l'eau, puisse être stable.

Un autre but de la présente invention est de fournir un monomère qui permette des formulations de ces produits (Tolonate) en phase aqueuse, en vue de répondre à l'évolution des techniques et des réglementations tendant à faire disparaître les solvants organiques.

Un autre but de la présente invention est de fournir un monomère dont les (co)polymères permettent l'obtention d'émulsions aqueuses présentant une concentration massique d'environ 40 %.

Un autre but de la présente invention est de fournir un monomère dont les (co polymères permettent l'obtention d'émulsions aqueuses présentant une bonne stabilité (chimique et colloïdale) dans le temps.

Un autre but de la présente invention est de fournir un monomère dont les (co)polymères permettent l'obtention d'émulsions aqueuses qui donnent des couches de revêtement présentant une bonne adhésion sur les supports (tels que résistant au pelage normalisé sur revêtement quadrillé).

Un autre but de la présente invention est de fournir un monomère dont les (co)polymères permettent l'obtention d'émulsions aqueuses qui donnent des couches de revêtement présentant une bonne résistance aux chocs (déformation rapide: tests ASTM et AFNOR , flexibilité suffisante pour pliage (mandrin conique) et emboutissage (test embouti Erichsen), dureté superficielle élevée (Persoz).

Un autre but de la présente invention est de fournir un monomère dont les (co)polymères permettent l'obtention d'émulsions aqueuses qui donnent des couches de revêtement présentant de bonnes propriétés optiques (brillance).

Un autre but de la présente invention est de fournir un monomère dont les (co)polymères permettent l'obtention d'émulsions aqueuses qui donnent des couches de revêtement présentant une bonne résistance aux solvants (cétone....).

Ces buts et d'autres qui apparaîtront par la suite sont atteints au moyen d'un monomère qui répond à la formule suivante:

[(R₁)(R₂)C=C(R₃)-CO-L-]q A(-NCObloc)p (Formule 1)

- où les R₁, R₂ et R₃ semblables ou différents représentent un hydrogène ou un groupe choisi parmi :
- les chaînes hydrocarbonées de 1 à 12 atomes de carbone notamment les alcoyles, y compris les aralcoyles, les aryles, les alcoxyles et les silyles ;
- les atomes d'halogènes non réactifs (fluor, voire chlore);
- des fonctions électroattractrices comportant avantageusement le groupe carbonyle, tel que alcoxycarbonyle, hydroxy carbonyle (acide carboxylique), amino carbonyle (amide) ;
- où les L, semblables ou différents, représentent un radical hydrocarboné divalent (avantageusement en oméga oméga prime) de 2 à 12 atomes de carbone, avantageusement de formule :

   -Y-L'-Y'-(NH-CO)z- (Formule 2)
où Y et Y', semblables ou différents, représentent :
. soit une liaison simple ;
. soit un groupement choisi parmi les groupes suivants :
   -(R₅)C(R₆)-;-NR₄-; O ou -S-;
   avec R₅, R₆ et R₄ représentant un hydrogène ou un groupe choisi parmi :
   - les radicaux hydrocarbonées de 1 à 12 (avantageusement de 1 à 4) atomes de carbone notamment les alcoyles, les aryles, les aralcoyles et les silyles ;
   - les atomes d'halogènes non réactifs (fluor, voire chlore) ;
      . où L' représente une chaîne hydrocarbonée, notamment les alcoylènes, les arylenes, les aralcoylènes et les silylènes [chaîne qui peut être interrompue par un ou plusieurs atomes de chalcogènes, de préférence légers, soufre ou avantageusement oxygène, chaque atome de chalcogène étant de préférence séparé par au moins deux atomes de carbones comme dans les glymes ; avantageusement un radical alcoylène (tel que - [CH₂]ₘ -) de préférence peu ramifié de préférence avec les valences libres en ω, ω'
      . où z est égal à 0 ou, de préférence, à 1 ;
   - où A représente un squelette organique présentant n valences libres, n étant compris entre 2 et 7 (intervalle ferme) avantageusement entre 2 (non compris cette valeur et 4; et n étant égal à p+q ;
   - où NCObloc représente une fonction isocyanate protégée ;
   - où p est compris entre 1 et 6, avantageusement entre 1 et 3 de préférence entre 1,5 et 2,5 (intervalles fermés) ;
   - où q est compris entre 1 et 6 (intervalle fermé), avantageusement supérieur à 1 et au plus égal à 3 (intervalle semi-ouvert, semi-fermé), de préférence au plus égal à 2 (intervalle semi-ouvert, semi-fermé et par le fait que l"atome d'azote des fonctions isocyanates protégées est liée à un carbone saturé (hybridation SP3).

Les agents bloquants le plus couramment utilisés sont ceux cités par M. WICKS dans son article "blocked isocyanates".

En général, et pour des raisons pratiques manifestes, les valeurs de p et de q sont des valeurs moyennes, ou statistiques, et dans ce cas, elles peuvent prendre des valeurs fractionnaires. ainsi q est avantageusement compris entre 1 (non compris) et 1,5, de préférence 1,01 et 1,2, plus préférentiellement 1,1 plus ou moins 0,05. n est en général choisi parmi 3, 4 ou 5, de préférence 3.

Comme on l'a vu ci-dessus, les chaînes et radicaux hydrocarbonées peuvent être interrompus par un ou plusieurs atomes de chalcogènes, de préférence légers, soufre ou avantageusement oxygène, chaque atome de chalcogène étant de préférence séparé par au moins deux atomes de carbones comme dans les glymes (on peut en lieu et place de chalcogéne utiliser des groupements de type -NR₄-avec l'inconvénient possible que les amines peuvent catalyser la libération de certains groupes protecteurs, comme les pyrazoles)]. Ils peuvent également porter toute fonction non réactive dans les conditions de la synthèse et de la polymérisation.

Il convient de mentionner que le nombre total de carbones du dit monomère est avantageusement compris entre 10 et 100, préférentiellement compris entre 20 et 100, plus préférentiellement entre 25 et 75.

Le squelette A peut être constitué à partir d'une polyamine (y compris les anilines) lourde, par exemple présentant un nombre de carbone au moins égale à 6 avantageusement à 10. de préférence à 15 [que l'on transforme en isocyanate par action du phosgène de manière en soi connue].

Le squelette A peut être constitué à partir d'une polyamine (y compris les polyanilines) que l'on aura fait réagir avec des polyisocyanates (le plus souvent diisocyanates) dont on aura bloqué antérieurement, ou bloquera postérieurement, une fraction des fonctions isocyanates.

Le squelette A peut être constitué à partir d'un polyol (y compris les polyphénols et les composé équivalents tels que thiol), que l'on aura fait réagir avec des polyisocyanates (le plus souvent diisocyanates) dont on aura bloqué antérieurement, ou bloquera postérieurement, une fraction des fonctions isocyanates.

Le squelette A peut être constitué à partir d'un composé polyfonctionel comportant des fonctions à hydrogène mobile, en général alcool(s) et amine(s), composé polyfonctionel que l'on aura fait réagir avec des polyisocyanates (le plus souvent diisocyanate) dont on aura bloqué antérieurement, ou bloquera postérieurement, une fraction des fonctions isocyanates.
dans les cas ci-dessus :
soit le composé polyfonctionel (qui comporte avantageusement plus de deux et au plus 4 fonctions, de préférence trois) comportera initialement au moins un groupe

   [(R₁)(R₂)C=C(R₃)-CO-Y-L'Y'-
soit on fera réagir ultérieurement sur les fonctions isocyanates un composé du type

   [(R₁)(R₂)C=C(R₃)-CO-Y-L'Y'-H.

Il convient de signaler que les groupes protecteurs se libèrent plus facilement si l'azote de la fonction isocyanate protégée est liée à un carbone insaturé notamment aromatique, ce qui peut être parfois un inconvénient.

Dans l'application revêtement il est préférable que l'azote de la fonction isocyanate protégée soit liée à un carbone saturé (hybridation SP3).

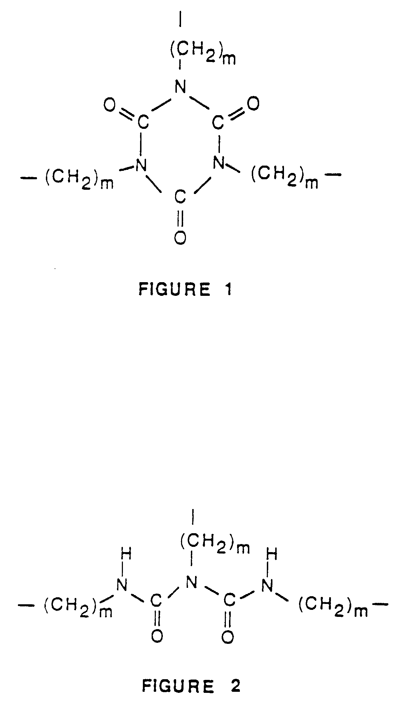

Le squelette A peut également être celui des trimères et des biurets [cf. respectivement figure 1 (trimère) et figure 2 (biuret); dans le cas de ces figures, m varie de 3 à 12 et les squelettes figurés sont trivalents]. Dans ce cas, les valeurs de n, p et q sont des valeurs moyennes. Dans ce cas, Y et Y' sont avantageusement oxygène; L' est un radical (-CH₂-)_{ζ} avec ζ compris entre 2 et 10 et m+ ζ avantageusement compris entre 4 et 12.

Ce squelette A peut être avantageusement choisi parmi les Tolonates (m = 6) (marque déposée), trimère et biuret.

Les monomères selon la présente invention peuvent être réalisés aisément à partir des isocyanates correspondants en mettant en oeuvre la séquence d'étapes en elles-mêmes connues, suivante :
A) protection d'une portion (dans le rapport p/n) des fonctions isocyanates,
B) réaction du reste des isocyanates avec un réactif dit "à H mobile" de formule

   (R₁)(R₂)C=C(R₃)-CO-Y-L'-Y'-H.
ou en inversant "mutatis mutandis", les deux étapes :
AI) réaction d'une portion ( dans le rapport q/n) des fonctions isocyanates avec un réactif dit "à H mobile" de formule (R₁)(R₂)C=C(R₃)-CO-L-H
B') protection du reste des fonctions isocyanates.

Ou bien, enfin, en réalisant une "préparante", c'est à dire un mélange des deux réactifs dans le rapport (p/q) que l'on fait réagir avec le dérivé comportant plusieurs fonctions isocyanates.

La maîtrise du respect de ladite portion est obtenue par le simple respect de la stoechiométrie.

[Progress n Organic Coatings (1975), vol. 3, p. 73]-leur température de déblocage sont avantageusement supérieure à 90°C.

Il est préférable de réaliser les synthèses du monomère en présence d'un inhibiteur de polymérisation, par exemple de type quinonique, tel que l'hydroquinone cette inhibiteur et notamment l'hydroquinone étant avantageusement présente à hauteur de 100 à 10000 ppm (masse ) du composé à hydrogène mobile portant une insaturation éthylénique

Les monomères (seuls ou sous forme de mélange) selon la présente invention se sont révélés particulièrement facilement polymérisables avec les mono- ou oligomères acrylique ou vinylique.

Aussi l'invention vise-t-elle aussi une composition caractérisée par le fait qu'elle comporte en émulsion dans l'eau au moins un (co)polymère issu de la copolymérisation de, ou du mélange de monomère(s) de formule 1,

[(R₁)(R₂)C=C(R₃)-CO-L-]q A(-NCObloc)p (Formule 1)

- où les R₁, R₂ et R₃ semblables ou différents représentent un hydrogène ou un groupe choisi parmi :
- les chaînes hydrocarbonées de 1 à 12 atomes de carbone notamment les alcoyles, les aryles, les aralcoyles, les alcoxyles et les silyles ;
- les atomes d'halogènes non réactifs ;
- des fonctions électroattractrices comportant avantageusement le groupe carbonyle, tel que alcoxycarbonyle, hydroxy carbonyle, amino carbonyle ;
- où les L, semblables ou différents, représentent un radical hydrocarboné divalent de 2 à 12 atomes de carbone, avantageusement de formule :

   -Y-L'-Y'-(NH-CO)z- (Formule 2)
où Y et Y', semblables ou différents, représentent :
. soit une liaison simple ;
. soit un groupement choisi parmi les groupes suivants :
   -(R₅)C(R₆)-;-NR₄-; O ou-S-;
   avec R₅, R₆ et R₄ représentant un hydrogène ou un groupe choisi parmi :
   - les radicaux hydrocarbonés de 1 à 12 (avantageusement de 1 à 4) atomes de carbone notamment les alcoyles, Les aryles, les aralcoyles et les silyles;
   - les atomes d'halogènes non réactifs (fluor, voire chlore);
      . où L' représente une chaîne hydrocarbonée, notamment les alcoylènes, les arylènes, les aralcoylènes et les silylènes [chaîne qui peut être interrompue par un ou plusieurs atomes de chalcogènes, de préférence légers, soufre ou avantageusement oxygène, chaque atome de chalcogéne étant de préférence séparé par au moins deux atomes de carbones comme dans les glymes ; avantageusement un radical alcoylène de préférence peu ramifié de préférence avec les valences libres en ω, ω' (tel que -[CH₂]ₘ-)
      . où z est égal à 0 ou, de préférence, à 1;
   - où A représente un squelette organique présentant n valences libres, n étant compris entre 2 et 7 (intervalle fermé) avantageusement entre 2 (non compris cette valeur et 4 et n étant égal à p+q;
   - où NCObloc représente une fonction isocyanate protégée;
   - où p est compris entre 1 et 6, avantageusement entre 1 et 3 de préférence entre 1,5 et 2,5 (intervalles fermés) ;
   - où q est compris entre 1 et 6 (intervalle fermé), avantageusement supérieur à 1 et au plus égal à 3 (intervalle semi-ouvert, semi-fermé), de préférence au plus égal à 2 (intervalle semi-ouvert, semi-fermé) ;
avec un ou des (co)monomère(s) choisis parmi les vinyliques et les acryliques.

Les groupes protecteurs sont choisis parmi ceux qui, dans les conditions de la polymérisation et pendant sa durée, ne libèrent qu'au plus 10%, avantageusement qu'au plus 5%, de préférence qu'au plus 1%.

Il est notamment possible de réaliser des latex acrylovinyliques qui présentent la possibilité de formulations en phase aqueuse, sans solvant organique et avec une rhéologie des formulations obtenues qui autorise une mise en oeuvre aisée.

Ces latex-Tolonate3 (notamment de type HDB et HDT) confèrent notamment des caractéristiques optiques (absence de jaunissement), mécaniques (résistance au choc, dureté superficielle, flexibilité pour pliage et emboutissage) et d'adhérence élevées à des peintures et vernis haut de gamme formulés.

Ainsi la présente invention vise aussi des (co)polymères. Ils sont issus de la copolymérisation des monomères de formule 1 avec des (co)monomères choisis parmi les vinyliques et les acryliques.

Les particules de latex contenant lesdites fonctions isocyanates sont classiquement constituées de polymères obtenus par polymérisation de monomères éthyléniquement insaturés. Il s'agit d'un homopolymère ou copolymère contenant des motifs dérivés de monomères vinylaromatiques, éthyléniques, d'acides ou d'esters alcenoiques ou éthyléniques, éventuellement fonctionnalisés.

Ce type de polymère peut être facilement obtenu à partir de (co)monoméres accessible à tout homme de l'art et on se contentera de citer quelques (co)monomères ci-après, à titre non limitatif de l'invention.

Il peut s'agir de :
- monomères éthyléniques de type isoprène, 1,3-butadiène, chlorure de vinylidène, acrylonitrile,
- monomères vinylaromatiques comme le styrène, le bromostyrène, l'alphaméthylstyrène, l'éthylstyrène, le vinyltoluène, le chlorostyrène ou le vinylnaphtalène,
- acides, esters ou anhydrides alcanoiques comme les acides acrylique. méthacrylique, acrylates et méthacrylates d'alcoyle dont le groupe alcoyle possède 3 à 10 atomes de carbone. hydroxyalcoylacrylates, les esters d'acides éthyléniques à 4 ou 5 atomes de carbone les dits (co)monomères sont avantageusement choisis parmi :
   - le styrène et ses dérivés (vinyltoluène, éthylvinylbenzène) ;
   - les esters, hydroxyesters et amides de l'acide (méth)-acrylique tels que le méthacrylate de méthyle, l'acrylate de butyle, (méth)acrylamide ;
   - les esters vinyliques (acétate de vinyle, propionate de vinyle) ;
   - les chlorures de vinyle et vinylidène ;
   - les vinylpyridines (2-vinylpyridine, 4-vinylpyridine, 2-méthyl 5-vinylpyridine);
   - les di(éthyl) amino-alcoyl (méth)-acrylates ;
   - les di(éthyl) amino-alcoyl (méth)-acrylamides.. ;
   - l'allylamine ;
   - l'éthylène imine ;
   - le (méth)-acrylonitrile ;
   - le N-vinylimidazole ;
   - les dialcoylaminométhyl-styrènes ;
   - la vinylpyrrolidone ;
   - le divinylbenzène et ses dérivés ;
   - les diènes conjugués (butadiène...) ;
   - les dérivés polyallyliques (tétraallyléthylène...) ;
   - les (méth) acrylates de polyols (diméthacrylate d'éthylène glycol...) ;
   - le méthylène-bis (acrylamide) ;
   - l'acide-bis (acrylamido) acétique ;

Parmi les polymères pouvant constituer lesdites particules, on peut citer les homopolymères ou les copolymères contenant des motifs dérivés des monomères vinyliques, acryliques, vinylaromatiques, d'esters vinyliques, d'esters d'alcoyle et d'acides α et β insaturés. d'esters d'acides carboxyliques insaturés, de chlorure de vinyle, de chlorure de vinylidène et/ou de diènes.

A titre illustratif (ou plus précisément de paradigme), on peut plus particulièrement mentionner les (co)monoméres suivants:

A titre de monomères vinyliques et acryliques convenant à l'invention, on peut plus particulièrement citer ceux dérivant du styrène, de l'acide acrylique, d'ester acryliques. l'acide méthacrylique, le maléate de monobenzyle, la 2vinylpyridine, le méthylsulfonate de styrène, le chlorométhylstyrène, l'hydroxypropylméthacrylate, l'hydroxybutylacrylate, l'hydroxyéthylacrylate, l'acrylonitrile et/ou l'acroléine.

Ces monomères sont utilisés seuls ou en mélange entre eux en toute proportion, ou encore en mélange avec un autre monomère copolymérisable choisi parmi ceux précités.

Les particules de polymères peuvent être obtenues par la mise en oeuvre d'une quelconque technique de polymérisation comme la polymérisation en émulsion classique, en micro émulsion ou le cas échéant, par polymérisation en milieu organique. Ces techniques familières à l'homme de l'art ne seront pas rappelées ici.

Les particules, constituant le latex porteur de fonction(s) isocyanate(s) selon l'invention, sont hydrophobes et possèdent avantageusement une taille (d₉₀) généralement comprise entre 0,01micromètre et 20 micromètres et de préférence au plus égale à 5 micromètres voire à 3 micromètres. Elles sont calibrées, monodispers(é)es et présentes dans le latex à raison d'une quantité variant entre 0,2 à 65 % en poids du poids total du latex.

Selon la présente invention pour obtenir des résultats satisfaisants, il est souhaitable que la teneur du (co)polymère (latex ou épicouche dans le cas d'une épipolymérisation) en fonction(s) isocyanate(s) bloquée(s) soit au moins égale 5.10⁻² avantageusement à 0,1 de préférence à 0,2 fonction plus préférentiellement 0,3 fonction par kilogramme (équivalents gramme par kilogramme). Il n'y a pas de limite supérieure sinon économique, il est quand même souhaitable que le pourcentage masse du, ou du mélange de, monomère(s) selon l'invention ne dépasse pas 75 % du poids masse de latex

Il n'y a de limite supérieure qu'économique. Dans le cas où l'on utilise un trimère de tolonate (figure 1 avec m = 6) avec environ deux fonctions isocyanates masquées par une protection méthyléthylcétoxime et une branche acrylate d'hydroxyéthyle greffée sur la dernière fonction isocyanate, une valeur de 0,1 fonction par kilogramme correspond environ à une incorporation de 5 % en masse du monomère de formule I dans le latex.

La présente invention se rapporte également à un procédé de préparation de latex porteurs de fonction(s) isocyanate(s) selon les techniques suivantes :
- l'introduction, en cours de polymérisation du ou des monomères(s) constituant les particules du latex, d'un monomère selon l'invention en suspension dans une fraction du ou d'un des monomères et
- surpolymérisation (dans le sens d'une épipolyméristion) qui consiste en une synthèse du type parfois désignée sous le terme anglo-saxon "core-shell": une semence de latex est surpolymérisée par le(s) (co)monomère(s) en présence d'initiateur et d'un tensioactif. Le monomère selon l'invention, en suspension dans une fraction de (co)monomère(s), est introduit en fin de polymérisation de façon à obtenir des billes de latex, d'une granulométrie précise et resserrée dans lesquelles le monomère selon l'invention est greffé à une distance plus ou moins grande du coeur des particules.

En général, la température de polymérisation est comprise entre 30 et 90°C, avantageusement entre 40 et 80°C. En général, la durée est comprise entre 1 et 10, avantageusement entre 4 et 8°heures.

Après polymérisation, le latex est traité par adjonction d'un système rédox et par distillation, éventuellement sous vide, afin d'en éliminer toute trace de monomères résiduels, puis purifié.

Avantageusement, le polymère constituant le latex contient de 1 à 50 % en poids, avantageusement 3 à 25 % en poids, du monomère selon l'invention.

La présente invention a également pour objet des compositions utiles pour peintures comportant en émulsions dans l'eau au moins un (co)polymère selon l'invention.

Selon un mode de réalisation de l'invention la composition comporte en outre un catalyseur de déblocage des fonctions isocyanates.(cf. Journal of Applied Polymer Science "Catalysis of the Isocyanate - Hydroxyl Reaction" vol. IV, issue N°11, p. 207, (1960), J. W. BRITAIN).

Ces catalyseurs sont en eux-mêmes connus et sont avantageusement choisis parmi ceux qui induisent une température de libération des fonctions isocyanates au plus égale à la température usuelle des opérations ultimes de prise du vernis ou de la peinture ou d'équivalents.

La température de libération induite par les catalyseurs est avantageusement au moins égale à 100°C environ.

La composition des peintures peuvent comprendre aussi une base colorée. constituée d'un pigment et d'oxyde de titane.

La taille des particules de l'émulsion est avantageusement comprise entre 0,01 micromètre et 20 micromètres, de préférence entre 0,05 micromètre et 10 micromètres.

La concentration massique de copolymère dans l'eau est avantageusement comprise entre 20 ° et 45 %.

Avantageusement, la phase aqueuse contient des oligomères solubles de type polyol, ou condensat polyol-(poly)amine ou polyester-polyol en quantité suffisante pour permettre la polycondensation finale.

Ce sont les polyols utilisés usuellement lors des condensations avec les isocyanates courants.

La stabilité au stockage des dispersions ainsi obtenues est bonne. Les exemples non limitatifs suivants illustrent l'invention.

### EXEMPLE 1

Préparation d'un monomère acrylique fonctionnalisé avec un Tolonate HDT bloqué méthyléthylcétoxime ci-après désignée par l'acronyme MEKO) et condensé avec l'hydroxyéthylacrylate (HEA).
± On met en oeuvre les matières premières suivantes :

| | |
|---|---|
| Tolonate HDT (dit NCO 0,52 équivalent) | 100 g |
| MEKO 0,346 mol (M=87) | 30,2 g |
| HEA 0,174 mol (M=1 16) | 20,2 g |
| Acrylate de butyle (solvant) | 100,2 g |

Le matériel utilisé est le suivant :
. Réacteur de 250 ml sous atmosphère d'azote double enveloppe
. Agitateur à ancre (300tr/min)
. Réfrigérant
. Ampoule de coulée

On suit le mode opératoire défini ci-après :

Dans le réacteur, surmonté du réfrigérant, on introduit le Tolonate HDT (trimère de l'hexaméthylène diisocyanate). Le milieu est chauffé à 60-70°C et la méthyléthylcétoxime (MEKO) est introduite par l'intermédiaire de l'ampoule de coulée de sorte que la température ne dépasse pas 80-90'C.

Après la fin de l'addition, la température du milieu est maintenue durant l heure environ à 80 ± 5°C.

A l'issue de cette période. on ajoute goutte à goutte l'acrylate d'hydroxyéthyle (HEA) et la température du milieu est maintenue à 80-90°C.

En fin d'addition, le milieu est maintenu à 80 ± 5°C durant une heure.

En fin de réaction, l'indice NCO du milieu est de 0,00 groupes NCO/100 g.

Le milieu est refroidi alors à 60-65°C et coulé sur l'acrylate de butyle.

On obtient ainsi une solution de monomère acrylique fonctionnalisé par le Tolonate HDT bloqué dans l'acrylate de butyle dont l'extrait sec est de 60%.

Le NCO latent de la solution résultante est de 0,207 NCO/100 g de solution ou 8,7 %.

### EXEMPLE 2

Dans l'exemple suivant, on prépare un tolonate HDT bloqué méthyl éthyl cétoxime (MEKO) et hydroxyéthylacrylate (HEA).

On met en oeuvre les matières premières suivantes:

| | |
|---|---|
| Tolonate HDT (Concentration en NCO 0,52 équivalent) | 100 g |
| MEKO 0,346 mol (M=87) | 30,2 g |
| HEA 0,174 mol (M=1 16) | 20,2 g |
| Acrylate de butyle (solvant) | 100,2 g |

Le matériel utilisé est le suivant :
. Réacteur de 250 ml sous atmosphère d'azote double enveloppe . Agitateur à ancre (300tr/min)
. Réfrigérant
. Ampoule de coulée

On suit le mode opératoire défini ci-après:

Dans un becher on introduit la méthyléthylcétoxime (MEKO) et l'acrylate d'hydroxyéthyle (HEA) (préparante). Dans le réacteur, surmonté du réfrigérant, on introduit le tolonate HDT. Le milieu est chauffé à 60-70°C, la préparante est introduite par l'intermédiaire d'une ampoule de coulée de sorte que la température ne dépasse pas 80-90°C. En fin d'addition, la température du milieu est maintenue une heure environ à 80°C ± 5°C.

En fin de réaction. l'indice NCO du milieu est de 0,00 groupes NCO/100 g. Le milieu est refroidi alors à 60-65°C et coulé sur l'acrylate de butyle. On obtient ainsi une solution de Tolonate HDT bloqué dans l'acrylate de butyle.

### EXEMPLE 3

Copolymérisation en émulsion avec des monomères acryliques et vinyliques, du monomère fonctionnel (dénommé AEHDB), obtenu suivant l'exemple 1 par condensation dans l'acrylate de butyle (ABu), de l'hydroxyéthylacrylate avec le trimère HDT partiellement bloqué avec la méthyléthylcétoxime.

Dans un autoclave de 25 litres en acier inoxydable muni d'un agitateur, on introduit :
- 1 00 parties d'eau désionisée,
- 48 parties de styrène,
- 48 parties du mélange AEHDB/ABu préparé dans l'exemple 1, préalablement dilué avec de l'ABu pour contenir 20 % en poids de AEHDB,
- 2,4 parties d'acide acrylique,
- 0,7 partie de lauryl sulfate de sodium,
- 0,9 partie de persulfate d'ammonium.

On chauffe le mélange réactionnel à 75 C sous agitation, et maintient cette température pendant la durée de réaction, soit 9 heures. Le taux de conversion est alors de 98 %. Le latex obtenu contient une fraction massique de particules (extrait sec) de 49 %. Les particules présentent un diamètre de 0,120 micromètre, et une composition sensiblement équivalente à celle des produits (co-monomères, initiateur, émulsifiants) mis en oeuvre.

### EXEMPLE 4

Copolymérisation en émulsion du monomère fonctionnel (dénommé AEHDB), obtenu suivant l'exemple I (condensation dans l'ABu (acrylate de butyle), de acrylate d'hydroxyélhyle (HEA) avec le trimère HDT partiellement bloqué avec la méthyléthylcétoxime), dans une semence constituée d'un latex de copolymère acrylovinylique.

### I. Préparation de la semence :

Dans un autoclave de 25 litres en acier inoxydable muni d'un agitateur, on introduit :
- 1 00 parties d'eau désionisée.
- 32 parties de styrène,
- 1 partie de divinylbenzène.
- 55 parties d'ABu,
- 7 parties de monométhacrylate d'éthylèneglycol,
- 2,6 parties d'acide acrylique,
- 1,6 parties de dodécylsulfonate de sodium,
- 0,8 partie de persulfate d'ammonium.

On chauffe le mélange réactionnel à 80 C sous agitation, et maintient cette température pendant la durée de réaction, soit 10 heures. Le taux de conversion est alors de 99 %. Le latex obtenu contient une fraction massique de particules (extrait sec) de 49,5 %. Les particules présentent un diamètre d'environ 0,070 micromètre et une composition sensiblement équivalente à celle des produits (co-monomères, initiateur, émulsifiants) mis en oeuvre. Ce latex va être utilisé comme semence pour polymériser le monomère AEHDB.

### 2. Copolymérisation de l'AEHBD dans la semence préparée :

On introduit dans un autoclave de 25 litres en acier inoxydable, muni d'un agitateur :
- 15 litres du latex semence (extrait sec massique = 49,5 %),
- 400 g du mélange AEHDB/ABu préparé dans l'exemple 1, qui contient 60 % en poids de AEHDB,
- 100 g de styrène,
- 5 grammes de potasse.

On porte la température du milieu réactionnel à 75°C et on introduit dans l'autoclave 10 grammes de persulfate de potassium dissous dans 1,5 l d'eau désionisée. On maintient cette température pendant 5 heures, puis on porte la température à 85°C et on la maintient pendant 3 heures. On refroidit alors à la température ambiante. On obtient ainsi un latex stable fonctionnalisé avec les groupements isocyanates bloqués, dont l'extrait sec massique est de 46,5 % et dont la taille est 0.072 micromètre.

### EXEMPLE 5

Dispersion aqueuse stable, contenant un latex fonctionnalisé avec des fonctions isocyanates bloquées et un condensat hydrosoluble de poyolpolyamine.

Dans un récipient muni d'une agitation, on introduit 1 I du latex fonctionnalisé préparé selon l'exemple 3, dans lequel on ajoute ensuite le produit de réaction de 240 g de polycaprolactoneglycol, de 48,75 g de propane sulfone, et 13,05 g d'hexaméthylènediamine, avec 10 g d'acide sulfosuccinique comme émulsifiant. On obtient ainsi une dispersion aqueuse qui présente une bonne stabilité sur une période supérieure à 6 mois.

Par déshydratation sur un support métallique ou plastique (PVC), et séchage pendant 5 heures à 130-C, la dispersion forme un film de polymère c continu et réticulé.

### EXEMPLE 6

Copolymérisation en microsuspension du monomère fonctionnel (dénommé AEHDB), obtenu suivant l'exemple I (condensation dans l'ABu, du HEA avec le trimère HDT partiellement bloqué avec la méthyléthylcétoxime).

Dans un premier récipient muni d'une agitation, une phase organique est préparée par mélange des constituants suivants :
- 55 parties de styrène,
- 3,5 parties de peroxyde de lauroyle,
- 41,5 parties du mélange AEHDB/ABu préparé dans l'exemple 1,préalablement dilué avec l'ABu pour contenir 30 % en poids de AEHDB.

Dans un second récipient muni d'une agitation, est également préparée une phase aqueuse par dissolution dans 12 l d'eau déminéralisée, de 60 g laurylsulfate de sodium et de 60 g de nonylphénol éthoxylé (30 motifs d'oxyde d'éthylène par molécule). 5 kg de la phase précédemment préparée sont alors ajoutés et dispersés dans la phase aqueuse. Le mélange obtenu est homogénéisé à température ambiante, de façon à obtenir des gouttelettes de phase organique dispersée dans l'eau de taille 0,6 micromètre.

Le mélange est introduit dans un réacteur de 25 litres en acier inoxydable, muni d'un agitateur, où il est polymérisé à 70 C. Après 12 heures, le milieu réactionnel est refroidi et le monomère résiduel est éliminé par entraînement à la vapeur.

On obtient ainsi 4,9 kg d'un latex stable fonctionnalisé par des groupements isocyanates bloqués, dont l'extrait sec est 28,8 % et le diamètre moyen des particules de 0,8 micromètre.

### EXEMPLE 7

### BUT:

Synthèse d'un acryluréthane bloqué, par condensation d'hydroxyéthylacrylate (1/3) avec le HDT bloqué Méko 2/3 en solution dans l'acrylate de butyle (ES = 60 %).

### Mise en oeuvre :

HDT (NC0 = 0,525) = 100 g
MEKO (Servoxim Y250 > 99,5 %) 0,35 mole x87 = 30,45 g.
Hydroxyéthylacrylate (ATOCHEM) 0,175 mole x 116 = 20,3 g stabilisé avec :
   hydroquinone (qualité photo) 0,1 % par rapport à HEA,
   catalysé avec DBTL (100 %) 0,2 % par rapport à HEA,
Acrylate de butyle (ATOCHEM) pour ES = 60 % = 100,5 g

### Appareil :

Ballon 500 ml avec agitation, réfrigérant, chauffe-ballon régulé "Vertex", ampoule de coulée, bullage argon.

### Mode opératoire :

Dans ballon 500 ml sous argon, on introduit 100 g d'HDT, 100,5 g d'acrylate de butyle, puis on coule 30,45 g de MECO à θ ambiante en 4 mn, Il y a exothermie (θ↗ 55°C), on suit la teneur en NCO libre tout en laissant redescendre la température à l'ambiante (T = 20mn, NCO = 0,077 ; T = 40 mn,NCO = 0,077). On ajoute alors 20,3 g d'hydroxyéthylacrylate en - 1mn, à θ = 28°C; il n'y a pas d'exothermie notable, on chauffe à θ = 50°C puis on suit les NCO en maintenant θ = 50°C. à

| | |
|---|---|
| T = 15' | NCO = 0,013 |
| T = 30' | NCO = 0,009 |
| T = 1 h | NCO = 0,005 |
| T = 1 h 30 | NCO = 0,004 + 2 % excès HEA = 0,4 g exothermie θ = 60°C |
| T = 1 h 45 | NCO = 0,0025 |
| T = 2 h 00 | NCO = 0,0007 arrêt pour la nuit |

chauffer le milieu réactionnel à 50°C + 2 % excès HEA = 0,4 g pas d'exothermie notable à T = 2 h 30 NCO = 0,000

Dans le produit obtenu q est supérieur à 1 (entre 1,02 et 1, 04).
Viscosité du produit final : 139 cp

### EXEMPLE 8

Copolymérisation en émulsion d'un mélange de monomères acryliques contenant 5 % en poids du monomère fonctionnel AEHDB, selon un procédé basé sur une préémulsion des comonomères.

### Préémulsion

Dans une cuve de 25 l, on mélange 4,5 kg d'eau désionisée avec 244 g d'une solution aqueuse de dodécylbenzènesulfonate de sodium (DBS-Na) de concentration 23 % en poids. On introduit dans cette solution et sous agitation le mélange de comonomères acryliques suivants :
- 5,29 kg de méthacrylate de méthyle (MAM),
- 5,06 kg d'acrylate de butyle (ABu),
- 337 g d'acide acrylique (AA),
- 938 g d'un mélange AEHDB/ABu contenant 60 % en poids de monomère fonctionnel AEHDB.

Le mélange obtenu est émulsifié à l'aide d'un homogénéiseur ULTRATURAX (commercialisé par PROLABO) pendant 5 minutes à 20 000 tours/minute. On obtient ainsi la préémulsion des monomères acryliques contenant le monomère fonctionnel AEHDB.

### Polymérisation

Dans un réacteur de 25 litres en acier inoxydable muni d'un agitateur, on introduit 9,87 kg d'eau désionisée que l'on porte à 80°C sous agitation.

On ajoute ensuite :
- 500 g de la préémulsion préparée ci-dessus,
- 500 g d'une solution aqueuse contenant 33,75 d'initiateur persulfate d'ammonium.

On attend 15 minutes pour que l'amorçage de la réaction s'effectue, puis on ajoute sur une durée de 4 heures, le reste de la préémulsion, soit 15,87 kg.

On ajoute ensuite 750 g d'eau et on laisse cuire à 81°C pendant 1 heure.

Puis on refroidit à 60°C et on ajoute 11,25 g d'hydroperoxyde de tertiobutyle et 6,75 g de Na₂S₂O₅. On maintient la température à 60°C pendant 30 minutes, puis on refroidit à température ambiante. On neutralise avec une solution d'ammoniaque diluée à 20 %. On obtient ainsi un latex qui présente les caractéristiques suivantes :
- 40,5 % d'extrait sec massique,
- pH = 7,5
- viscosité Brookfield RTV-DV 11 (50t/min) : 29 centipoises,
- taille des particules : 0,9 micromètres,
- taux de grains : 170 ppm.

### EXEMPLE 9

Copolymérisation en émulsion d'un mélange de monomères acryliques contenant 7 % en poids du monomère fonctionnel AEHDB, selon un procédé basé sur une préémulsion des comonomères.

### Préémulsion

Dans une cuve de 25 l, on mélange 4,5 kg d'eau désionisée avec 244 g d'une solution aqueuse de dodécylbenzènesulfonate de sodium (DBS-Na) de concentration 23 % enpoids. On introduit dans cette solution et sous agitation le mélange de comonomères acryliques suivants :
- 4,84 kg de méthacrylate de méthyle (MAM),
- 5,06 kg d'acrylate de butyle (ABu),
- 563 g d'acide acrylique (AA),
- 1,31 kg d'un mélange AEHDB/ABu contenant 60 % en poids de monomère fonctionnel AEHDB.

Le mélange obtenu est émulsifié à l'aide d'un homogénéiseur ULTRATURAX (commercialisé par PROLABO) pendant 5 minutes à 20 000 tours/minute. On obtient ainsi la préémulsion des monomères acryliques contenant le monomère fonctionnel AEHDB.

### Polymèrisation

Dans un réacteur de 25 litres en acier inoxydable muni d'un agitateur, on introduit 9,22 kg d'eau désionisée que l'on porte à 80°C sous agitation ; on ajoute ensuite :
- 500 g de la préémulsion préparée ci-dessus,
- 500 g d'une solution aqueuse contenant 33,75 g d'initiateur persulfate d'ammonium.

On attend 15 minutes pour que l'amorçage de la réaction s'effectue, puis on ajoute sur une durée de 4 heures, le reste de la préémulsion, soit 16,02 kg.

On ajoute ensuite 750 g d'eau et on laisse cuire à 81°C pendant 1 heure. Puis on refroidit à 60°C et on ajoute 11,25 g d'hydroperoxyde de tertiobutyle et 6,75 g de Na₂S₂O₅. On maintient la température à 60°C pendant 30 minutes, puis on refroidit à température ambiante. On neutralise avec une solution de soude diluée à 10 %. On obtient ainsi un latex qui présente les caractéristiques suivantes :
- extrait sec massique : 39,4 %,
- pH = 7,5,
- viscosité Brookfield RTV-DV 11 (50 t/min) : 52 centipoises,
- taille des particules : 1,5 micromètres,
- taux de grains : 26 ppm.

### EXEMPLE 10

Copolymérisation en émulsion d'un mélange de monomères acryliques et se styrène contenant 7 % en poids du monomère fonctionnel AEHDB, selon un procédé basé sur une préémulsion des comonomères.

### Préémulsion

Dans une cuve de 25 l, on mélange 4,5 kg d'eau désionisée avec 245 g d'une solution aqueuse de dodécylbenzènesulfonate de sodium (DBS-Na) de concentration 23 % en poids. On introduit dans cette solution et sous agitation le mélange de comonomères acryliques suivants :
- 5,10 kg de styrène (S),
- 4,80 kg d'acrylate de butyle (ABu),
- 565 g d'acide acrylique (AA),
- 1,30 kg du mélange AEHDB/ABu contenant 60 % en poids de monomère fonctionnel AEHDB.

Le mélange obtenu est émulsifié à l'aide d'un homogénéiseur ULTRATURAX (commercialisé par PROLABO) pendant 5 minutes à 20 000 tours/minute. On obtient ainsi la préémulsion d'un mélange de monomères acryliques et du styrène, contenant lemonomère fonctionnel AEHDB.

### Polymérisation

Dans un réacteur de 25 litres en acier inoxydable muni d'un agitateur, on introduit 9,22 kg d'eau désionisée que l'on porte à 80°C sous agitation.

On ajoute ensuite :
- 500 g de la préémulsion préparée ci-dessus,
- 500 g d'une solution aqueuse contenant 33,75 g d'initiateur persulfate d'ammonium.

On attend 15 minutes pour que l'amorçage de la réaction s'effectue, puis on ajoute sur une durée de 4 heures, le reste de la préémulsion, soit 16,01 kg.

On ajoute ensuite 750 g d'eau et on laisse cuire à 81°C pendant 1 heure.

Puis on refroidit à 60°C et on ajoute 11,25 g d'hydroperoxyde de tertiobutyle et 6,75 g de Na₂S₂O₅. On maintient la température à 60°C pendant 30 minutes, puis on refroidit à température ambiante. On neutralise avec une solution de soude diluée à 10 %. On obtient ainsi un latex qui présente les caractéristiques suivantes :
- extrait sec massique : 39,6 %,
- pH = 7,5,
- viscosité Brookfield RTV-DV 11 (50 t/min) : 58 centipoises,
- taille des particules : 1,2 micromètres,
- taux de grains : 220 ppm.

### EXEMPLE 11

Copolymérisation en émulsion d'un mélange de monomères acryliques contenant 10 % en poids du monomère fonctionnel AEHDB, selon un procédé basé sur une préémulsion des comonomères.

### Préémulsion

Dans une cuve de 25 l, on mélange 4,5 kg d'eau désionisée avec 244 g d'une solution aqueuse de dodécylbenzènesulfonate de sodium (DBS-Na) de concentration 23 % en poids. On introduit dans cette solution, sous agitation, le mélange de comonomères acryliques suivants :
- 4,5 kg de méthacrylate de méthyle (MAM),
- 5,06 kg d'acrylate de butyle (ABu),
- 563 g d'acide acrylique (AA),
- 1,88 kg du mélange AEHDB/ABu contenant 60 % en poids demonomère fonctionnel AEHDB.

Le mélange obtenu est émulsifié à l'aide d'un homogénéiseur ULTRATURAX (commercialisé par PROLABO) pendant 5 Minutes à 20 000 tours/minute. On obtient ainsi la préémulsion des monomères acryliques contenant lemonomère fonctionnel AEHDB.

### Polymérisation

Dans un réacteur de 25 litres en acier inoxydable muni d'un agitateur, on introduit 9,22 kg d'eau désionisée quel'on porte à 80°C sous agitation.

On ajoute ensuite :
- 500 g de la préémulsion préparée ci-dessus,
- 500 g d'une solution aqueuse contenant 33,75 g d'initiateur persulfate d'ammonium.

On attend 15 minutes pour que l'amorçage de la réaction s'eftectue, puis on ajoute sur une durée de 4 heures, le reste de la préémulsion, soit 16,25 kg.

On ajoute ensuite 750 g d'eau et on laisse cuire à 81°C pendant 1 heure.

Puis on refroidit à 60°C et on ajoute 11,25 g d'hydroperoxyde de tertiobutyle et 6,75 g de Na₂S₂O₅. On maintient la température à 60°C pendant 30 Minutes, puis on refroidit à température ambiante. On neutralise avec une solution de soude diluée à 10 %. On obtient ainsi un latex qui présente les caractéristiques suivantes :
- extrait sec massique : 40,5 %,
- pH = 7,5,
- viscosité Brookfield RTV-DV 11 (50 t/min) : 78 centipoises,
- taille des particules : 0,84 micromètres,
- taux de grains : 315 ppm.

### EXEMPLE 12

### Fabrication du produit bloquè 1/3 HEA 2/3 Meko

- tolonate HDT = 500 g (indice NCO = 22,05 %)
- Meko (méthyl éthyl etoxime) = 152,3 g (1,75 mole)
- HEA (hydroxy éthyl acrylate) = 101,5 g (0,875 mole)

Dans un réacteur de 1 I introduire le tolonate HDT (500 g) puis à température ambiante, couler la meko (152,3 g) en 10 Minutes.

La réaction exothermique fait passer la température de 20 à 50°C.

Aprés maintien de 30' à cette température, la HEA est couléé en 5 minutes, l'exothermie fait passer la température à 70°C.

Aprés maintien à 70°C pendant 1 h la masse réactionnelle est refroidie à 20°C.

### EXEMPLE 13

| **Formulation des 4 produits obtenus** | | | | |
|---|---|---|---|---|
| **PROPRIETES** | **TEMOINS** | **LATEX GREFFE Tolonate 5 % (Exemple 8)** | **LATEX GREFFE Tolonate 7 % (Exemple 9)** | **LATEX GREFFE Tolonate 10 % (Exemple 11)** |
| Référence n° | A | B | C | D |
| Composition (%) | 52MMA/45BA/ 3AA | 47 MMA/45 BA/ 3AA + 5 % AUB | 43 MMA/45BA/ 5 AA + 7 % AUB | 40 MMA/45 BA/ 5AA + 10 % AUB |
| E.S. (%) avant neut. | 39,6 | 40,7 | 40,9 | 40,9 |
| . avec NH₄OH | 39,3 | 40,5 | 40,7 | 40,6 |
| . avec NaOH | 38,9 | 40,0 | 39,4 | 40,6 |
| . avec Na₂CO₃ | 38,7 | 39,8 | 39,0 | 40,5 |
| Viscosité (cps) | 25 | 29 | - | 21 |
| . avec NH₄OH | 25 | 29 | 540 | 680 |
| . avec NaOH | 23 | 25 | 52 | 708 |
| . avec Na₂CO₃ | 24 | 25 | 42 | 72 |
| Ph (avant neutr.) | 2,4 | 2,85 | 3,10 | 3,25 |
| . avec NH₄OH | 8,1 | 8,50 | 8,00 | 8,20 |
| . avec NaOH | 7,5 | 7,50 | 7,50 | 9,00 |
| . avec Na₂CO₃ | 7,5 | 7,50 | 7,50 | 7,50 |
| Taille des particules (nm) | 730 | 910 | > 1500 | 840 |
| MMA = méthylméthacrylate BA = butylacrylate AUB : Acrylméthane bloqué AA = acide acrylique | | | | |

Chacun de ces 4 produits est neutralisé par l'une des 3 solutions suivantes : NH₄OH, NaOH, Na₂CO₃.

### EXEMPLE 14

### ESSAI EN FORMULATION VERNIS

Une formulation vernis (latex greffe Tolonate + Résine polyol) a permis de connaitre les produits de meilleurs performance.

### Caractéristiques du mélange de formulation :

. Tolonate greffé Latex (A, B, O ou D)
. SYNAQUA 3510 WL (Cray Valley)
   Polyol polyester à 50 % dans eau/Proglyde DMM
   Rapport NCO bloquè / OH = 1
   Film 100 µ humide (_{~} 50 µ sec)
   Séchage à l'air 18 h puis cuisson 30' à 1 h à 160°C.

Le mélange est appliqué en film sur plaques de verre (100 µm humide) puis caractérisé par la dureté PERSOZ (exprimée en secondes) et la résistance à la méthyléthylcétone (MEK)

| | | |
|---|---|---|
| échelle de la résistance à la méthyléthylcétone (valeur de 0 à 4) | O : | Pas de dégradation du film |
| | 1 | Légère attaque |
| | 2 | Le film est louche |
| | 3 | Le film est plissé |
| | 4 | Le film est dissous |

Les 4 produits obtenus en A (témoin), B, C ou D sont formulés avec le polyol (ainsi que A seul) puis appliqué en film et mesurés.

Les produits C et D traités NaOH permettent d'obtenir des propriétés de dureté et de résistance aux solvants acceptables.

| **LATEX GREFFES TOLONATE BLOQUE APRES NEUTRALISATION NH4OH** | | | | | | | |
|---|---|---|---|---|---|---|---|
| **Réf.** | **Caract.** | **Avant Cuisson** | | **Après 160°C/30'** | | **Après 160°C/ 1h** | |
| | | ***Dureté*** | ***Test MEK*** | ***Dureté*** | ***Test MEK*** | ***Dureté*** | **Test *MEK*** |
| A | Latex seul | 290 | 4 | 288 | 2 | 299 | 2 |
| A | Latex + Polyol | 170 | 4 | 212 | 4 | 237 | 4 |
| B | LtX + Tol 5 % + polyol | 183 | 4 | 218 | 1 | 211 | 1 |
| C | LtX + Tol 7 % + polyol | 235 | 4 | 270 | 1 | 276 | 1 |
| D | Ltx + Tol 10 % + Polyol | 119 | 1 | 175 | 1 | 210 | 0 |

### EXEMPLE 15 : ESSAI EN FORMULATION PEINTURE

Les produits C et D sont appliqués sur plaque acier aprés formulation suivante :
- Latex greffé Tolonate 7 % ou 10 %
- Polyol SYNAQUA 3510 WL (CRAY - VALLEY)
- Tio₂ (THANN et MULHOUSE)
avec [NCO]/ [OH] = 1
et [Pigment (TiO₂)]/[Liant] = 0,7
- épaisseur du feuil = 50 µ environ

| **PRODUIT** | **A Seul** | **A + Polyol** | **C** | **D** |
|---|---|---|---|---|
| Epaisseur (sec) | 41 µ | 38 µ | 46 µ | 57 µ |
| Cuisson | 1 h 160°C | 1 h 160°C | 1 h à 160°C | 1 h / 160°C |
| Aspect | Craquelé | Lisse | Homogène | Homogène |
| **Dureté**(s) (persoz) | 143 | 165 | 122 | 93 |
| | | | | |
| **Pliage** | OK | OK | OK | OK |
| Embouti Enichem | 7,9 | 8,7 | 7,9 | 8,7 |
| | | | | |
| **Choc envers** | | | | |
| AFNOR | 100 | 100 | 100 | 100 |
| ASTN | 80 | 80 | 80 | 80 |
| | | | | |
| **Adhérence** | OK | OK | OK | OK |
| | | | | |
| **Brillance** (%) | 48 | 39 | 13 | 12 |
| | | | | |
| **RUB-TEST** | | | | |
| Attaque Chimique (MEK) | Film Détruit | Film Détruit | RAS | RAS |

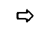 les produits C et D présentent une résistance chimique satisfaisante.

## Revendications

1. Composition caractérisée par le fait qu'elle comporte en émulsion dans l'eau au moins un (co)polymère issu de la copolymérisation de, ou du mélange de, monomère(s) de formule 1,
[(R₁)(R₂)C=C(R₃)-CO-L-]q A(-NCObloc)p (Formule 1)
- où les R₁, R₂ et R₃ semblables ou différents représentent un hydrogène ou un groupe choisi parmi :
- les chaînes hydrocarbonées de 1 à 12 atomes de carbone notamment les alcoyles, les aryles, les aralcoyles, les alcoxyles et les silyles ;
- les atomes d'halogènes non réactifs ;
- des fonctions électroattractrices comportant avantageusement le groupe carbonyle, tel que alcoxycarbonyle, hydroxy carbonyle, amino carbonyle ;
- où les L, semblables ou différents, représentent un radical hydrocarboné divalent de 2 à 12 atomes de carbone, avantageusement de formule :
-Y-L'-Y'-(NH-CO)z- (Formule 2)
où Y et Y', semblables ou différents. représentent :
. soit une liaison simple;
. soit un groupement choisi parmi les groupes suivants :
-(R₅)C(R₆)-;-NR₄-; O ou-S-;
avec R₅, R₆ et R₄ représentant un hydrogène ou un groupe choisi parmi :
- les radicaux hydrocarbonées de 1 à 12 (avantageusement de 1 à 4) atomes de carbone notamment les alcoyles, Les aryles, les aralcoyles et les silyles;
- les atomes d'halogènes non réactifs
. où L' représente une chaîne hydrocarbonée, notamment les alcoylènes, les arylènes, les aralcoylènes et les silylènes [chaîne qui peut être interrompue par un ou plusieurs atomes de chalcogènes, de préférence légers, soufre ou avantageusement oxygène, chaque atome de chalcogéne étant de préférence séparé par au moins deux atomes de carbones comme dans les glymes ; avantageusement un radical alcoylène de préférence peu ramifié de préférence avec les valences libres en ω, ω' (tel que -[CH₂]ₘ-)
. où z est égal à 0 ou, de préférence, à 1;
- où A représente un squelette organique présentant n valences libres, n étant compris entre 2 et 7 (intervalle fermé) avantageusement entre 2 (non compris cette valeur et 4 et n étant égal à p+q;
- où NCObloc représente une fonction isocyanate protégée;
- où p est compris entre 1 et 6, avantageusement entre 1 et 3 de préférence entre 1,5 et 2,5 (intervalles fermés) ;
- où q est compris entre 1 et 6 (intervalle fermé), avantageusement supérieur à 1 et au plus égal à 3 (intervalle semi-ouvert, semi-fermé), de préférence au plus égal à 2 (intervalle semi-ouvert, semi-fermé) ;
avec un ou des (co)monomère(s) choisis parmi les vinyliques et les acryliques.

2. Composition selon la revendication 1, caractérisée par le fait que le nombre total de carbones du dit monomère de formule 1 est avantageusement compris entre 10 et 100, préférentiellement compris entre 20 et 100, plus préférentiellement entre 25 et 75.

3. Composition selon les revendications 1 et 2, caractérisée par le fait qu'elle forme un latex acrylovinylique.

4. Composition selon les revendications 1 à 3, caractérisée par le fait que les dits (co)monomères sont choisis parmi :
- le styrène et ses dérivés (vinyltoluène, éthylvinylbenzène) ;
- les esters. hydroxyesters et amides de l'acide (méth)-acrylique tels que le méthacrylate de méthyle, l'acrylate de butyle, (méth)acrylamide ;
- les esters vinyliques (acétate de vinyle, propionate de vinyle) ;
- les chlorures de vinyle et vinylidène ;
- les vinylpyridines (2-vinylpyridine, 4-vinylpyridine, 2-méthyl 5-vinylpyridine) ;
- les di(éthyl) amino-alcoyl (méth)-acrylates ;
- les di(éthyl) amino-alcoyl (méth)-acrylamides.. ;
- l'allylamine ;
- l'éthylène imine ;
- le (méth)-acrylonitrile ;
- le N-vinylimidazole ;
- les dialcoylaminométhyl-styrènes ;
- la vinylpyrrolidone ;
- le divinylbenzène et ses dérivés ;
- les diènes conjugués (butadiène...) ;
- les dérivés polyallyliques (tétraallyléthylène...) ;
- les (méth) acrylates de polyols (diméthacrylate d'éthylène glycol...) ;
- le méthylène-bis (acrylamide) ;
- l'acide-bis (acrylamido) acétique ;

5. Composition selon les revendications 1 à 4, caractérisée par le fait que ledit monomère présente comme radical 1 un squelette de trimère ou de biuret ...

6. Composition selon les revendications 1 à 5, caractérisée par le fait que la composition comporte en outre un catalyseur de déblocage des fonctions isocyanates.

7. Composition selon les revendications 1 à 6, caractérisée par le fait qu'elle contient des oligomères solubles de type polyol, ou condensat polyol(poly)amine ou polyester-polyol en quantité suffisante pour permettre la polycondensation finale.

8. Procédé de préparation de polymère selon la revendication 1, caractérisé par le fait que l'on introduit, en cours de polymérisation du ou des (co)monomères(s) constituant les particules dudit polymère, d'au moins un des monomères selon la formule 1, en suspension dans une fraction du ou d'un des monomères.

9. Procédé de synthèse d'un monomère selon la formule 1, à partir d'isocyanate correspondant, caractérisé par le fait qu'il comporte les étapes, en elles-mêmes connues, suivantes :
A) protection d'une portion (dans le rapport p/n) des fonctions isocyanates,
B) réaction du reste des isocyanates avec un réactif dit "à H mobile" de formule :
(R₁)(R₂)C=C(3)-CO-L-H.

10. monomère qui répond à la formule suivante:
[(R₁)(R₂)C=C(R₃)-CO-L-]q A(-NCObloc)p (Formule 1)
- où les R₁, R₂ et R₃ semblables ou différents représentent un hydrogène ou un groupe choisi parmi :
- les chaînes hydrocarbonées de 1 à 12 atomes de carbone notamment les alcoyles, y compris les aralcoyles, les aryles, les alcoxyles et les silyles ;
- les atomes d'halogènes non réactifs ;
- des fonctions électroattractrices comportant avantageusement le groupe carbonyle, tel que alcoxycarbonyle, hydroxy carbonyle (acide carboxylique), amino carbonyle (amide) ;
- où les L, semblables ou différents, représentent un radical hydrocarboné divalent (avantageusement en oméga oméga prime) de 2 à 12 atomes de carbone, avantageusement de formule :
-Y-L'-Y'-(NH-CO)z- (Formule 2)
où Y et Y', semblables ou différents. représentent:
. soit une liaison simple ;
. soit un groupement choisi parmi les groupes suivants :
-(R₅)C(R₆)-;-NR₄-; O ou-S- ;
avec R₅, R₆ et R₄ représentant un hydrogène ou un groupe choisi parmi :
- les radicaux hydrocarbonées de 1 à 12 (avantageusement de 1 à 4) atomes de carbone notamment les alcoyles, les aryles, les aralcoyles et les silyles ;
- les atomes d'halogènes non réactifs ;
. où L' représente une chaîne hydrocarbonée, notamment les alcoylènes, les arylènes, les aralcoylènes et les silylènes [chaîne qui peut être interrompue par un ou plusieurs atomes de chalcogènes, de préférence légers, soufre ou avantageusement oxygène, chaque atome de chalcogéne étant de préférence séparé par au moins deux atomes de carbones comme dans les glymes ; avantageusement un radical alcoylène (tel que -[CH₂]ₘ -) de préférence peu ramifié de préférence avec les valences libres en ω, ω'
. où z est égal à 0 ou, de préférence, à 1 ;
- où A représente un squelette organique présentant n valences libres, n étant compris entre 2 et 7 (intervalle fermé) avantageusement entre 2 (non compris cette valeur et 4 ; et n étant égal à p+q ;
- où NCObloc représente une fonction isocyanate protégée ;
- où p est compris entre 1 et 6, avantageusement entre 1 et 3 de préférence entre 1,5 et 2,5 (intervalles fermés) ;
- où q est compris entre 1 et 6 (intervalle fermé), avantageusement supérieur à 1 et au plus égal à 3 (intervalle semi-ouvert, semi-fermé), de préférence au plus égal à 2 (intervalle semi-ouvert, semi-fermé), et par le fait que l'atome d'azote des fonctions isocyanates protégées est liée à un carbone saturé (hybridation SP3).

## Claims

1. Composition characterized in that it contains, as an emulsion in water, at least one (co)polymer, resulting from the copolymerization, or mixture, of monomer(s) of formula 1,
[(R₁)(R₂)C=C(R₃)-CO-L-]_{q}A(-NCOblock)ₚ (formula 1)
- where the R₁, R₂ and R₃, which are similar or different, denote a hydrogen or a group chosen from:
- hydrocarbon chains of 1 to 12 carbon atoms, especially alkyls, aryls, aralkyls, alkoxys and silyls;
- unreactive halogen atoms;
- electron-withdrawing functional groups advantageously comprising the carbonyl group, such as alkoxycarbonyl, hydroxycarbonyl or aminocarbonyl;
- where the Ls, which are similar or different, denote a divalent hydrocarbon radical of 2 to 12 carbon atoms, advantageously of formula:
-Y-L'-Y'-(NH-CO)_{z}- (formula 2)
where Y and Y', which are similar or different, denote:
either a single bond;
or a group chosen from the following groups:
-(R₅)C(R₆)-, -NR₄-, O or -S-;
with R₅, R₆ and R₄ denoting a hydrogen or a group chosen from:
- hydrocarbon radicals of 1 to 12 (advantageously of 1 to 4) carbon atoms, especially alkyls, aryls, aralkyls and silyls;
- unreactive halogen atoms;
where L' denotes a hydrocarbon chain, especially alkylenes, arylenes, aralkylenes and silylenes [chain which may be interrupted by one or more, preferably light, chalcogen atoms, sulphur or advantageously oxygen, each chalcogen atom being preferably separated by at least two carbon atoms as in the glymes]; advantageously an alkylene radical, preferably not very branched, preferably with free ω,ω' valencies (such as -[CH₂]ₘ-) where z is equal to 0 or, preferably, to 1;
- where A denotes an organic skeleton which has n free valencies, n being between 2 and 7 (closed interval), advantageously between 2 (not including this value) and 4, and n being equal to p+q;
- where NCOblock denotes a protected isocyanate functional group;
- where p is between 1 and 6, advantageously between 1 and 3, preferably between 1.5 and 2.5 (closed intervals);
- where q is between 1 and 6 (closed interval), advantageously greater than 1 and not exceeding 3 (semiopen, semiclosed interval), preferably not exceeding 2 (semiopen, semiclosed interval);
with one or more (co)monomers chosen from vinyl and acrylic monomers.

2. Composition according to Claim 1, characterized in that the total number of carbons in the said monomer of formula 1 is advantageously between 10 and 100, preferably between 20 and 100, more preferably between 25 and 75.

3. Composition according to Claims 1 and 2, characterized in that it forms an acryl vinyl latex.

4. Composition according to Claims 1 to 3, characterized in that the said (co)monomers are chosen from:
- styrene and its derivatives (vinyltoluene, ethylvinylbenzene);
- (meth)acrylic acid esters, hydroxy esters and amides such as methyl methacrylate, butyl acrylate or (meth)acrylamide;
- vinyl esters (vinyl acetate, vinyl propionate);
- vinyl and vinylidene chlorides;
- vinylpyridines (2-vinylpyridine, 4-vinylpyridine, 2-methyl-5-vinylpyridine);
- diethylaminoalkyl (meth)acrylates;
- diethylaminoalkyl(meth)acrylamides etc.;
- allylamine;
- ethyleneimine;
- (meth)acrylonitrile;
- N-vinylimidazole;
- dialkylaminomethylstyrenes;
- vinylpyrrolidone;
- divinylbenzene and its derivatives;
- conjugated dienes (butadiene etc.);
- polyallyl derivatives (tetraallylethylene etc.);
- polyol (meth)acrylates (ethylene glycol dimethacrylate etc.);
- methylenebis(acrylamide);
- bis(acrylamido)acetic acid.

5. Composition according to Claims 1 to 4, characterized in that the said monomer has a trimer or biuret skeleton as radical 1.

6. Composition according to Claims 1 to 5, characterized in that the composition additionally comprises a catalyst for deblocking the isocyanate functional groups.

7. Composition according to Claims 1 to 6, characterized in that it contains soluble oligomers of polyol or polyol(poly)amine or polyester-polyol condensate type in sufficient quantity to permit the final polycondensation.

8. Process for the preparation of polymer according to Claim 1, characterized in that at least one of the monomers according to formula 1, in suspension in a proportion of the, or of one of the, monomers, is introduced during polymerization of the (co)monomer(s) forming the particles of the said polymer.

9. Process for the synthesis of a monomer according to formula 1, from the corresponding isocyanate, characterized in that it comprises the following stages, which are known per se:
A) protection of a proportion (in the ratio p/n) of the isocyanate functional groups,
B) reaction of the remainder of the isocyanates with a reactant referred to as "containing mobile H", of formula:
(R₁)(R₂)C=C(R₃)-CO-L-H.

10. Monomer which corresponds to the following formula:
[(R₁)(R₂)C=C(R₃)-CO-L-]_{q}A(-NCOblock)ₚ (formula 1)
- where the R₁, R₂ and R₃, which are similar or different, denote a hydrogen or a group chosen from:
- hydrocarbon chains of 1 to 12 carbon atoms, especially alkyls, including aralkyls, aryls, alkoxys and silyls;
- unreactive halogen atoms;
- electron-withdrawing functional groups advantageously comprising the carbonyl group, such as alkoxycarbonyl, hydroxycarbonyl (carboxylic acid) or aminocarbonyl (amide);
- where the Ls, which are similar or different, denote a divalent (advantageously omega,omega prime) hydrocarbon radical of 2 to 12 carbon atoms, advantageously of formula:
-Y-L'-Y'-(NH-CO)_{Z}- (formula 2)
where Y and Y', which are similar or different, denote:
either a single bond;
or a group chosen from the following groups:
-(R₅)C(R₆)-, -NR₄-, O or -S-;
with R₅, R₆ and R₄ denoting a hydrogen or a group chosen from:
- hydrocarbon radicals of 1 to 12 (advantageously of 1 to 4) carbon atoms, especially alkyls, aryls, aralkyls and silyls;
- unreactive halogen atoms;
where L' denotes a hydrocarbon chain, especially alkylenes, arylenes, aralkylenes and silylenes [chain which may be interrupted by one or more, preferably light, chalcogen atoms, sulphur or advantageously oxygen, each chalcogen atom being preferably separated by at least two carbon atoms as in the glymes]; advantageously an alkylene radical (such as -[CH₂]ₘ-), preferably not very branched, preferably with free ω,ω' valencies where z is equal to 0 or, preferably, to 1;
- where A denotes an organic skeleton which has n free valencies, n being between 2 and 7 (closed interval), advantageously between 2 (not including this value) and 4, and n being equal to p+q;
- where NCOblock denotes a protected isocyanate functional group;
- where p is between 1 and 6, advantageously between 1 and 3, preferably between 1.5 and 2.5 (closed intervals);
- where q is between 1 and 6 (closed interval), advantageously greater than 1 and not exceeding 3 (semiopen, semiclosed interval), preferably not exceeding 2 (semiopen, semiclosed interval), and the nitrogen atom of the protected isocyanate functional groups is bonded to a saturated carbon (sp³ hybridization).

## Patentansprüche

1. Zusammensetzung,
dadurch gekennzeichnet, daß sie in Emulsion in Wasser mindestens ein (Co)polymer umfaßt, stammend aus der Copolymerisation von oder der Mischung von Monomer(en) der Formel 1,
[(R₁)(R₂)C=C(R₃)-CO-L-]q A(-NCOblock)p (Formel 1),
- in der R₁, R₂ und R₃, die gleich oder verschieden sind, für ein Wasserstoffatom oder eine Gruppe stehen, ausgewählt unter:
- den Kohlenwasserstoffketten mit 1 bis 12 Kohlenstoffatomen, insbesondere den Alkylen, Arylen, Arylalkylen, Alkoxylen und Silylen,
- den nicht reaktiven Halogenatomen,
- elektronenanziehenden Gruppen, die vorteilhafterweise die Carbonylgruppe umfassen, wie Alkoxycarbonyl, Hydroxycarbonyl, Aminocarbonyl,
- in der L, die gleich oder verschieden sind, für einen zweiwertigen Kohlenwasserstoffrest mit 2 bis 12 Kohlenstoffatomen, vorteilhafterweise der Formel:
-Y-L'-Y'-(NH-CO)z- (Formel 2),
stehen, in der Y und Y', die gleich oder verschieden sind, entweder für
- eine Einfachbindung
- oder eine Gruppierung, ausgewählt unter den folgenden Gruppen: -(R₅)C(R₆)-, -NR₄-, O oder -S-, stehen,
wobei R₅, R₆ und R₄ für ein Wasserstoffatom oder eine Gruppe, die ausgewählt ist unter:
- den Kohlenwasserstoffresten mit 1 bis 12 (vorteilhafterweise 1 bis 4) Kohlenstoffatomen, insbesondere den Alkylen, Arylen, Arylalkylen und den Silylen,
- den nicht reaktiven Halogenen, stehen,
- in der L' für eine Kohlenwasserstoffkette, insbesondere die Alkylene, die Arylene, die Arylalkylene und die Silylene [eine Kette, die durch ein oder mehrere Chalkogenatome, vorzugsweise leichte, Schwefel oder vorteilhafterweise Sauerstoff, unterbrochen sein kann, wobei jedes Chalkogenatom vorzugsweise durch mindestens zwei Kohlenstoffatome wie in den Glymes voneinander getrennt ist], vorteilhafterweise einen Alkylenrest, vorzugsweise wenig verzweigt, vorzugsweise mit den freien Valenzen an ω,ω' (wie -[CH₂]ₘ-) steht,
- in der z gleich 0 oder vorzugsweise 1 ist,
- in der A für ein organisches Gerüst steht, das n freie Valenzen aufweist, wobei n zwischen 2 und 7 (geschlossenes Intervall), vorteilhafterweise zwischen 2 (wobei dieser Wert nicht einbegriffen ist) und 4 beträgt und n gleich p + q ist,
- in der NCOblock für eine geschützte Isocyanatgruppe steht,
- in der p zwischen 1 und 6, vorteilhafterweise zwischen 1 und 3 und vorzugsweise zwischen 1,5 und 2,5 liegt (geschlossene Intervalle),
- in der q zwischen 1 und 6 liegt (geschlossenes Intervall), vorteilhafterweise über 1 und höchstens gleich 3 (halboffenes, halbgeschlossenes Intervall), vorzugsweise höchstens gleich 2 (halboffenes, halbgeschlossenes Intervall) beträgt,
wobei ein oder mehrere (Co)monomer(e) aus den Vinylen und den Acrylen ausgewählt sind.

2. Zusammensetzung nach Anspruch 1,
dadurch gekennzeichnet, daß die Gesamtanzahl von Kohlenstoffatomen des Monomers der Formel 1 vorteilhafterweise zwischen 10 und 100, vorzugsweise zwischen 20 und 100 und noch bevorzugter zwischen 25 und 75 beträgt.

3. Zusammensetzung nach den Ansprüchen 1 und 2,
dadurch gekennzeichnet, daß sie einen Acrylvinyllatex bildet.

4. Zusammensetzung nach den Ansprüchen 1 bis 3,
dadurch gekennzeichnet, daß die (Co)monomere ausgewählt sind unter:
- Styrol und dessen Derivaten (Vinyltoluol, Ethylvinylbenzol),
- den Estern, Hydroxyestern und Amiden von (Meth)acrylsäure, wie Methylmethacrylat, Butylacrylat, (Meth)acrylamid,
- den Vinylestern (Vinylacetat, Vinylpropionat),
- den Vinylchloriden und Vinylidenchloriden,
- den Vinylpyridinen (2-Vinylpyridin, 4-Vinylpyridin, 2-Methyl-5-vinylpyridin),
- den Di(ethyl)amino-alkyl(meth)acrylaten,
- den Di(ethyl)amino-alkyl(meth)acrylamiden ..,
- Allylamin,
- Ethylenimin,
- (Meth)acrylnitril,
- N-Vinylimidazol,
- den Dialkylaminomethylstyrolen,
- Vinylpyrrolidon,
- Divinylbenzol und dessen Derivaten,
- den konjugierten Dienen (Butadien, ...),
- den polyallylischen Derivaten (Tetraallylethylen,...),
- den Polyol(meth)acrylaten (Ethylenglycoldimethacrylat, ...)
- Methylenbis(acrylamid),
- Bis(acrylamido)essigsäure.

5. Zusammensetzung nach den Ansprüchen 1 bis 4,
dadurch gekennzeichnet, daß das Monomer als Rest 1 ein Trimer-Gerüst oder ein Biuret-Gerüst ... aufweist.

6. Zusammensetzung nach den Ansprüchen 1 bis 5,
dadurch gekennzeichnet, daß die Zusammensetzung darüberhinaus einen Katalysator für die Entfernung der Schutzgruppen von den Isocyanatgruppen umfaßt.

7. Zusammensetzung nach den Ansprüchen 1 bis 6,
dadurch gekennzeichnet, daß sie lösliche Oligomere vom Typ Polyol oder Polyol(poly)amin- oder Polyesterpolyol-Kondensat in einer ausreichenden Menge enthält, um die abschließende Polykondensation zu erlauben.

8. Verfahren zur Herstellung des Polymers nach Anspruch 1,
dadurch gekennzeichnet, daß man während der Polymerisation des (Co)monomers oder der (Co)monomere, das bzw. die die Teilchen des Polymers bilden, mindestens eines der Monomere gemäß Formel 1 in Suspension in einem Anteil des oder eines der Monomere einmischt.

9. Verfahren zur Synthese eines Monomers gemäß der Formel 1 ausgehend von einem entsprechenden Isocyanat,
dadurch gekennzeichnet, daß es die folgenden, an sich bekannten Schritte umfaßt:
A) Schützen eines Teils (im Verhältnis p/n) der Isocyanatgruppen,
b) Umsetzen des Rests der Isocyanatgruppen mit einem als "mit mobilem H" bezeichneten Reagenz der Formel
(R₁)(R₂)C=C(3)-CO-L-H.

10. Monomer, das der folgenden Formel entspricht:
[(R₁)(R₂)C=C(R₃)-CO-L-]q A(-NCOblock)p (Formel 1),
- in der R₁, R₂ und R₃, die gleich oder verschieden sind, für ein Wasserstoffatom oder eine Gruppe stehen, ausgewählt unter:
- den Kohlenwasserstoffketten mit 1 bis 12 Kohlenstoffatomen, insbesondere den Alkylen, umfassend die Arylalkyle, Aryle, Alkoxyle und Silyle,
- den nicht reaktiven Halogenatomen,
- elektronenanziehenden Gruppen, die vorteilhafterweise die Carbonylgruppe umfassen, wie Alkoxycarbonyl, Hydroxycarbonyl (Carbonsäure), Aminocarbonyl (Amid),
- in der die Reste L, die gleich oder verschieden sind, für einen zweiwertigen (vorzugsweise in ω, ω'-Stellung) Kohlenwasserstoffrest mit 2 bis 12 Kohlenstoffatomen, vorteilhafterweise der Formel:
-Y-L'-Y'-(NH-CO)z- (Formel 2)
stehen, in welcher Formel Y und Y', die gleich oder verschieden sind, entweder für
- eine Einfachbindung
- oder eine Gruppierung, ausgewählt unter den folgenden Gruppen: -(R₅)C(R₆)-, -NR₄-, O oder -S-, stehen,
wobei R₅, R₆ und R₄ für ein Wasserstoffatom oder eine Gruppe, die ausgewählt ist unter:
- den Kohlenwasserstoffresten mit 1 bis 12 (vorteilhafterweise 1 bis 4) Kohlenstoffatomen, insbesondere den Alkylen, Arylen, Arylalkylen und den Silylen,
- den nicht reaktiven Halogenen, stehen,
- in der L' für eine Kohlenwasserstoffkette, insbesondere die Alkylene, die Arylene, die Arylalkylene und die Silylene [eine Kette, die durch ein oder mehrere Chalkogenatome, vorzugsweise leichte, Schwefel oder vorteilhafterweise Sauerstoff, unterbrochen sein kann, wobei jedes Chalkogenatom vorzugsweise durch mindestens zwei Kohlenstoffatome wie in den Glymes voneinander getrennt ist], vorteilhafterweise einen Alkylenrest [wie -[CH₂]ₘ-], vorzugsweise wenig verzweigt, vorzugsweise mit den freien Valenzen an ω, ω' steht,
- in der z gleich 0 oder vorzugsweise 1 ist,
- in der A für ein organisches Gerüst steht, das n freie Valenzen aufweist, wobei n zwischen 2 und 7 (geschlossenes Intervall), vorteilhafterweise zwischen 2 (wobei dieser Wert nicht einbegriffen ist) und 4 beträgt und n gleich p + q ist,
- in der NCOblock für eine geschützte Isocyanatgruppe steht,
- in der p zwischen 1 und 6, vorteilhafterweise zwischen 1 und 3 und vorzugsweise zwischen 1,5 und 2,5 liegt (geschlossene Intervalle),
- in der q zwischen 1 und 6 liegt (geschlossenes Intervall), vorteilhafterweise über 1 und höchstens gleich 3 (halboffenes, halbgeschlossenes Intervall), vorzugsweise höchstens gleich 2 (halboffenes, halbgeschlossenes Intervall) beträgt,
und daß das Stickstoffatom der geschützten Isocyanatgruppen an einen gesättigten Kohlenstoff (SP3-Hybridisierung) gebunden ist.
